# FASCICULE DE BREVET EUROPEEN

(11) **EP 3 215 331 B1**
(45) Date de publication et mention de la délivrance du brevet: **01.05.2019**
(21) Numéro de dépôt: 15798494.9
(22) Date de dépôt: 07.10.2015
(51) Int. Cl.: B29B 7/00, B29B 7/10, B29B 7/72, B29B 7/82, B29B 13/10, C08G 65/40, C08G 65/46, B33Y 70/00, B29C 64/314, B29B 9/12, B29K 71/00

(54) **PROCÉDÉ DE DENSIFICATION DE POUDRES DE POLYARYLENE-ÉTHER-CÉTONE (PAEK), UTILISATION D'UNE TELLE POUDRE DENSIFIÉE, ET OBJET FABRIQUÉ À PARTIR D'UNE TELLE POUDRE**
VERFAHREN ZUR VERDICHTUNG VON PULVERN AUS POLYARYLENETHERKETON (PAEK), VERWENDUNG EINES SOLCHEN VERDICHTETEN PULVERS SOWIE DARAUS HERGESTELLTES PRODUKT
PROCESS FOR DENSIFICATION OF POWDERS OF POLYARYLENETHERKETONE (PAEK), USE OF SUCH A DENSIFIED POWDER, AND PRODUCT MADE FROM SUCH A POWDER

(30) Priorité: 03.11.2014 FR 1460543; 03.11.2014 US 201462074338 P
(43) Date de publication de la demande: 13.09.2017
(73) Titulaire: Arkema France, 92700 Colombes (FR)
(72) Inventeur: BRULE, Benoît, F-27170 Beaumont-le-Roger (FR); HUZE, Denis, F-27120 Fontaine sous Jouy (FR); DECRAEMER, Nadine, F-27170 Beaumontel (FR); PASCAL, Jerome, F-27410 Grandchain (FR)
(86) Numéro de dépôt international: PCT/FR2015/052698
(87) Numéro de publication internationale: WO 2016/071596

(56) Documents cités:
- WO-A1-2013/068686
- DE-A1- 10 122 492
- DE-A1-102004 062 762
- DE-A1-102008 024 288
- DE-A1-102011 113 445
- US-A1- 2005 207 931
- US-A1- 2009 295 042
- US-A1- 2010 068 330
- US-B2- 7 847 057

## Description

### [Domaine de l'invention]

L'invention concerne le domaine des poudres de poly-arylène-éther-cétone. Plus précisément, l'invention concerne un procédé de densification d'une poudre ou d'un mélange de poudres à base de poly-arylène-éther-cétones, pour pouvoir les utiliser dans différentes applications telles que le frittage laser, le revêtement de poudre, le moulage transfert, la réalisation de composites par poudrage ou le moulage par compression par exemple.

### [Art antérieur]

Les poly-arylène-éther-cétones (PAEK) et plus particulièrement les polyéther-cétone-cétones (PEKK) sont des matériaux très performants à propriétés thermomécaniques élevées. Dans les abréviations précédentes, E désigne une fonction éther et K désigne une fonction cétone. Dans la suite du document, ces abréviations seront utilisées à la place de noms d'usage pour désigner les composés auxquels elles se rapportent.

Ces polymères sont utilisés pour des applications contraignantes en température et/ou en contraintes mécaniques, voire chimiques. On retrouve ces polymères dans des domaines aussi variés que l'aéronautique, les forages offshore, les implants médicaux. Ils peuvent être mis en oeuvre par moulage, extrusion, compression, filage, ou encore frittage laser. Selon le procédé de mise en forme, ils sont utilisés soit sous forme de granulés soit sous forme de poudres. Dans le cas de l'utilisation de poudres, elles résultent du broyage du produit issu de la polymérisation. Ces poudres sont peu denses et possèdent une densité tassée typiquement comprise entre 300 kg/m³ et 400 kg/m³.

Dans le cas de certaines applications, dont celles précitées, il peut s'avérer nécessaire d'utiliser des poudres de PAEK possédant une densité élevée, supérieure à la densité de la poudre obtenue après broyage du produit issu de la synthèse. En effet, une poudre plus dense implique une quantité d'air moins importante pour une même quantité de poudre. Il y a donc moins d'air à évacuer lors des procédés mettant en oeuvre ces poudres et l'obtention de pièces sans porosité est ainsi grandement facilitée. D'autre part, le matériau est au contact avec une quantité d'air moindre, ce qui limite le risque de thermo-oxydation. Enfin pour certaines applications comme le frittage laser, la densité de la poudre est primordiale pour assurer une tenue mécanique suffisante du lit de poudre constituant le bac de construction.

Le document US 7847057 concerne le domaine de la densification de poudres de PAEK par un procédé de traitement thermique. Le traitement consiste à exposer ladite poudre de PAEK à une température supérieure de 20°C et de préférence supérieure de 50°C à la température de transition vitreuse du polymère, pendant une durée supérieure à 30 minutes et de préférence pendant une durée supérieure à 1 heure. Ce procédé aboutit également à une réduction de la surface spécifique de la poudre et ainsi à une réduction des réactions secondaires pouvant se produire et dans lesquelles ladite poudre est susceptible d'être impliquée. Les essais décrits sont réalisés avec une poudre de PEEK placée dans un bécher ou dans un récipient en métal. Selon les conditions expérimentales, le gain en densité de la poudre peut aller jusqu'à 20%. Un tel gain n'apparait cependant pas suffisant pour certaines applications.

Le document FR1354916 déposé par la Demanderesse et non encore publié, concerne un procédé de traitement thermique de poudres comprenant du PEKK adaptées au frittage laser, ainsi que les poudres, issues de ce procédé, possédant une bonne coulabilité. Le procédé consiste notamment en un traitement thermique à une température comprise entre T+10°C et T-10°C où T est telle que T = 3,75 * A + 37,5 ; A représentant le pourcentage massique en motifs téréphtaliques par rapport à la somme des motifs téréphtalique et isophtalique, pendant une durée supérieure à 2 minutes. Un tel procédé permet d'obtenir une poudre possédant une bonne coulabilité et telle que la quantité massique de poudre restant non frittée après production de la pièce par frittage est minimisée. Cependant, ce traitement conduit à une diminution de la densité tassée de la poudre, c'est - à - dire au résultat contraire de ce que l'on cherche à obtenir.

Le document WO 2014/095676 concerne un procédé d'obtention d'une poudre de polymères thermoplastiques offrant des avantages dans des applications de type revêtement de poudres, en particulier une plus faible rugosité de surface. Le procédé décrit dans ce document comprend 2 étapes. Une première étape consiste à faire de la compression de poudre pour réaliser un cachet. Une deuxième étape consiste à broyer le cachet obtenu à la première étape. Cependant, la distribution granulométrique des particules est très hétérogène, alors même qu'il s'agit d'un paramètre qu'il est souhaitable de contrôler tout au long de la chaine de production des poudres de polymères et dans le cadre des applications ultérieures. C'est pourquoi, pour permettre l'obtention d'une poudre de granulométrie homogène prédéterminée, le procédé nécessite une troisième étape de sélection, consistant à sélectionner, dans la poudre obtenue, des particules d'une taille prédéterminée et à enlever les autres particules. Ce procédé apparait donc fastidieux, long et coûteux.

La demande WO 2013/068686 A1 décrit un procédé de broyage amélioré des poly-arylène-éther-cétones autorisant de bons rendements et l'obtention de poudres de diamètre moyen inférieur à 100 µm avec une distribution de taille resserrée et peu de particules fines.

De plus, la demanderesse a réalisé des essais de compaction et broyage sur une poudre de PEKK et ces essais ont conduit à un gain en densité de 10%, c'est-à-dire que la poudre compactée puis broyée avait une densité tassée de 10% supérieure à la poudre initiale. Ce gain n'apparait pas suffisant pour certaines applications.

La demanderesse a donc cherché une solution pour mettre en place un procédé permettant d'obtenir une augmentation significative de la densité des poudres de PAEK. En particulier, la demanderesse a cherché une solution pour obtenir un procédé applicable à toutes les poudres de PAEK, ayant subi ou non des traitements thermiques ou mécaniques préalables.

### [Problème technique]

L'invention a donc pour but de remédier à au moins un des inconvénients de l'art antérieur. En particulier l'invention a pour but de proposer un procédé de traitement de poudre visant à augmenter significativement la densité des poudres de poly-arylène-éther-cétone (PAEK), et permettant d'obtenir un gain de la densité tassée supérieur à 20% et de préférence supérieur à 40% par rapport à la poudre avant traitement.

### [Brève description de l'invention]

A cet effet, l'invention a pour objet un procédé selon la revendication 1 de densification d'une poudre ou d'un mélange de poudres de PAEK, caractérisé en ce qu'il consiste à mélanger la poudre ou le mélange de poudres, dans un mélangeur muni d'un agitateur rotatif comprenant au moins une pâle, pendant une durée comprise entre 30 minutes et 120 minutes, de préférence comprise entre 30 et 60 minutes, à une vitesse en bout de pâle comprise entre 30 m/s et 70 m/s, de préférence comprise entre 40 m/s et 50 m/s, et en ce que pendant le mélangeage, la température de la poudre augmente jusqu'à une température inférieure à la température de transition vitreuse la plus basse parmi les PAEK.

Le procédé de densification permet d'obtenir une augmentation significative de la densité de la poudre de PAEK, ou d'un mélange de poudres de PAEK comprenant du PEKK, quel que soit le(s) traitement(s) antérieur(s) subit(s) par ladite poudre, quelle que soit sa composition isomérique, et quelles que soient les proportions en PEKK au sein du mélange de poudres.

Selon d'autres caractéristiques optionnelles du procédé de densification :
- la poudre ne subit pas de régulation thermique pendant le mélangeage ;
- le mélangeur est régulé thermiquement de telle sorte que la température soit inférieure à 40°C pendant tout ou partie du mélangeage ;
- la poudre utilisée est une poudre de polyéther-cétone-cétone (PEKK) présentant un pourcentage massique en motifs téréphtaliques par rapport à la somme des motifs téréphtaliques et isophtaliques compris entre 55 et 85%.
- la poudre utilisée comprend, en plus du PEKK, une poudre choisie parmi l'une au moins des poudres suivantes : PEK, PEEKEK, PEEK, PEKEKK ; la poudre de PEKK représentant plus de 50% massique, borne comprise ;
- la poudre de PAEK comprend en outre au moins une charge ;
- la poudre de PAEK comprend en outre au moins un additif ;

L'invention se rapporte en outre à l'utilisation selon la revendication 7 de telles poudres densifiées par un tel procédé pour la fabrication d'objet par une technologie choisie parmi l'une des technologies suivantes : le frittage laser, le revêtement de poudre, le moulage par compression, ou le moulage transfert, ainsi qu'auxdits objets fabriqués à partir de ces poudres.

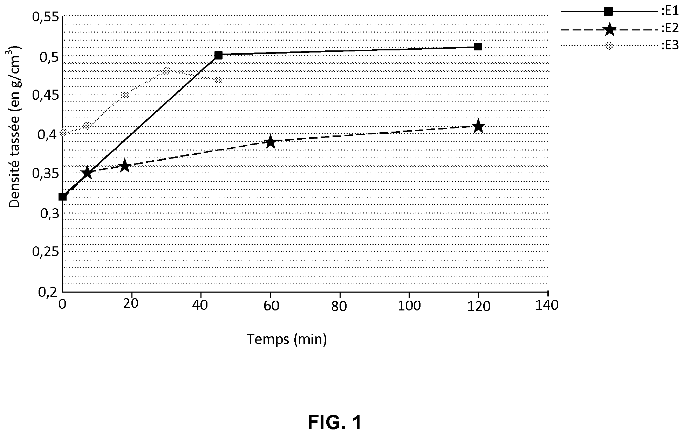

D'autres avantages et caractéristiques de l'invention apparaitront à la lecture de la description suivante, en référence à la Figure 1 annexée qui représente trois courbes indiquant l'évolution de la densité de trois échantillons de poudre en fonction du temps de traitement thermo-mécanique appliqué sur ces trois échantillons.

### [Description de l'invention]

La densité est définie comme le rapport des masses volumiques entre le matériau considéré et celle de l'eau et ne présente donc pas d'unité. Cependant dans un souci d'homogénéité avec ce qui est souvent lu dans la littérature on pourra assimiler la densité à la masse volumique et l'exprimer en kg/m³.

La densité tassée correspond au rapport de la masse d'un échantillon de poudre sur le volume de cet échantillon, ledit échantillon de poudre ayant été tassé avant que le volume n'ait été mesuré. Dans le cas de la densité non tassée, l'échantillon de poudre n'est pas tassé avant que son volume soit mesuré.

Les PAEK utilisés dans le procédé objet de l'invention comprennent notamment les PEKK, en particulier l'un de ses isomères ou un mélange de ses isomères. On ne saurait cependant exclure, dans un cadre plus général, l'ensemble des polyarylène-éther-cétone, notamment ceux répondants aux noms génériques de PEK, PEEK, PEEKEK, PEKEKK, où E désigne une fonction éther et K désigne une fonction cétone, en particulier lorsque leur utilisation se fait de façon combinée à celle du PEKK dans des proportions massiques où le PEKK représente plus de 50 % en proportion massique et de préférence plus de 80 % en proportion massique, bornes comprises.

De préférence les poly-arylène-éther-cétones sont des poly-éther-cétone-cétones comprenant un mélange de motifs téréphtalique et isophtalique de telle sorte que le pourcentage massique en motif téréphtalique par rapport à la somme des motifs téréphtalique et isophtalique soit compris entre 55% et 85% et de préférence entre 55% et 70%, idéalement 60%. Par motif téréphtalique et isophtalique, on entend la formule des acides téréphtalique et isophtalique respectivement.

Les poudres de PAEK, ou mélanges de poudres, utilisées dans le procédé objet de l'invention peuvent être obtenues par broyage ou par précipitation par exemple. Elles peuvent par exemple être obtenues conformément au procédé de broyage décrit notamment dans la demande FR 1160258. Elles peuvent le cas échéant comprendre un ou plusieurs additifs ou contenir différents composés tels que des charges, notamment des charges minérales telles que le noir de carbone, des nanotubes, de carbone ou non, des fibres broyées ou non, des agents stabilisants (lumière, en particulier UV, et chaleur), des agents facilitant l'écoulement tels que la silice, ou encore des azurants optiques, colorants, pigments, ou une combinaison de ces charges et/ou additifs.

Après avoir subi le procédé de traitement thermo-mécanique de l'invention, la poudre de PAEK présente un gain en densité tassée supérieur à 20% et de préférence supérieur à 40% par rapport à la poudre avant traitement.

Le procédé de traitement de telles poudres et permettant d'obtenir les poudres dont la densité tassée est significativement augmentée, consiste à mélanger la poudre de PAEK ou le mélange de poudres, notamment de PEKK dans un mélangeur rapide du commerce, tel que les mélangeurs rapides commercialisés par les sociétés Henschel, Diosna, Eirich, Lödige ou Kahl par exemple. Un tel mélangeur rapide est équipé d'un arbre rotatif comprenant au moins une pâle. La poudre est mélangée pendant une durée comprise entre 30 et 120 minutes, de préférence comprise entre 30 et 60 minutes, bornes comprises, à une vitesse en bout de pâle du mélangeur comprise entre 30 m/s et 70 m/s, de préférence comprise entre 40 et 50 m/s. Le mélangeage de la poudre peut être réalisé avec ou sans régulation thermique du mélangeur. Une telle régulation thermique peut être réalisée pendant toute ou partie de l'étape de mélangeage. Elle revient en général à refroidir le mélangeur de telle sorte que la température durant le mélangeage reste inférieure à 40°C. Une telle régulation thermique du mélangeur permet d'obtenir une densité améliorée, avec un gain en densité tassée, compris entre 20 et 30% par rapport à la poudre initiale.

Sans régulation thermique, la température de la poudre augmente pendant l'étape de mélangeage du fait de la friction entre la poudre et le mélangeur. Le traitement mécanique imposé à la poudre permet donc d'élever sa température à une température comprise généralement entre 80 et 100°C. Une telle température est inférieure à la température de transition vitreuse du PEKK utilisé, et inférieure à la température de transition vitreuse la plus basse parmi les polyarylène-éther-cétone utilisés, dans le cas d'un mélange de polymères. En effet, la température de transition vitreuse des polyarylène-éther-cétone est généralement comprise entre 130°C et 190°C. Cette température d'échauffement est également bien en dessous du traitement thermique décrit dans le document US 78447057 dont la température est supérieure d'au moins 20°C à la température de transition vitreuse. La synergie entre le traitement mécanique et l'échauffement thermique de la poudre permet d'obtenir une densification significativement augmentée de la poudre, avec un gain supérieur à 50% en densité tassée par rapport à la poudre initiale.

La poudre obtenue possède une densité significativement supérieure à la poudre de départ. Le gain en densité obtenu est différent selon que le mélangeur est régulé en température ou non, et généralement compris entre 20% et 60%. Typiquement le gain en densité obtenu avec refroidissement du mélangeur est supérieur ou égal à 20% alors que sans refroidissement du mélangeur il est supérieur ou égal à 50%.

Le procédé selon l'invention permet donc d'obtenir en particulier des poudres de PAEK possédant une densité significativement supérieure aux poudres initiales. Un avantage de ce procédé de densification est qu'il ne comprend qu'une seule étape, et permet un traitement rapide des poudres. Le procédé est aussi simple à mettre en oeuvre et est applicable à toutes les poudres de PAEK, ayant subi ou non des traitements thermiques ou mécaniques préalables. Les contraintes thermo-mécaniques appliquées permettent ainsi d'obtenir des poudres à très haute densité par rapport aux poudres initiales. Un fort gain en densité présente notamment les avantages suivants : pour une même quantité de poudre, la quantité d'air à éliminer est moins importante si bien que l'obtention d'objets sans porosité s'en trouve facilitée. Du fait de cette quantité d'air moins importante, le risque de thermo-oxydation est également limité. De plus, une poudre de densité significativement améliorée contribue à améliorer la tenue du lit de poudre en frittage laser. Enfin, le transport et la manipulation de la poudre s'en trouvent facilités.

Les exemples suivants illustrent de façon non limitative la portée de l'invention :

### Exemple 1: Mesure de la densité

La densité tassée et non tassée est mesurée selon la norme ISO 1068-1975 (F) de la façon suivante :
- Introduire un volume de poudre dans une éprouvette de précision en verre de 250 ml graduée ;
- Niveler si nécessaire la surface libre de la poudre sans la tasser et noter le volume V0;
- Peser l'éprouvette avec la poudre avec une balance de précision à 0.1 g dont la tare a été précédemment effectuée ;
- Placer l'éprouvette sur le plateau de l'appareil de tassement de type STAV 2003 ;
- Tasser avec 1250 chutes, noter le volume V1 ;
- Tasser avec 1250 chutes, noter le volume V2 ;
- Répéter l'opération de tassement jusqu'à obtenir deux volumes Vi équivalents. Noter Vf correspondant aux volumes Vi identiques.
La densité non tassée est la masse de poudre introduite divisée par V0. La densité tassée est la masse de poudre introduite divisée par Vf. Les densités tassée et non tassée s'expriment toutes les deux en kg/m³.

### Exemple 2 : Densification d'une poudre de PEKK par le procédé objet de l'invention :

Une poudre de PEKK commercialisée sous la référence de KEPSTAN ® 6002 par la société Arkema, contenant 60% en motifs téréphtaliques par rapport à la somme des motifs téréphtaliques et isophtaliques, dont la taille de particule présente un dv50 de 50µm plus ou moins 5µm, et dont la densité tassée est de 320 kg/m³ est soumise à différents traitements thermo-mécaniques dans un mélangeur rapide de type Henschel dont la vitesse en bout de pale est de l'ordre de 43m/s.

Le Dv50, ou diamètre médian en volume, correspond à la valeur de la taille de particule qui divise la population de particules examinée exactement en deux. Le Dv50 est mesuré selon la norme ISO9276 - parties 1 à 6. Dans la présente description, on utilise un granulomètre Malvern Mastersizer 2000, et la mesure est faite en voie liquide par diffraction laser sur poudre.

Trois échantillons de poudre sont comparés à la poudre initiale. La courbe de densité, en fonction du traitement thermo-mécanique et du temps, obtenue pour ces trois échantillons est représentée sur la Figure 1 et les résultats obtenus sont rassemblés dans le tableau I ci-dessous.

**Tableau I**

| | Durée traitement (min) | Densité tassée (en kg/m³) | Gain en densité |
|---|---|---|---|
| Poudre initiale | | 320 | |
| E1 : Henschel, sans refroidissement | 45 | 500 | 56% |
| E2 : Henschel, avec refroidissement | 60 | 390 | 22% |
| E3 : E2 dans Henschel, sans refroidissement | 30 | 480 | 50% |

Un premier échantillon de poudre, référencé E1, dont la courbe est représentée en trait noir continu sur la Figure 1, a été mélangé dans le mélangeur rapide sans régulation thermique, c'est-à-dire sans refroidissement. Le gain en densité tassée est de 56 % par rapport à la poudre initiale au bout de 45 minutes.

Un deuxième échantillon de poudre, référencé E2, dont la courbe est représentée en traits discontinus sur la Figure 1, a été mélangé dans le mélangeur rapide avec régulation thermique, c'est-à-dire avec un refroidissement à une température ambiante de l'ordre de 25°C. Dans ce cas, le gain en densité tassée est de 22 % par rapport à la poudre initiale au bout de 60 minutes et augmente encore en fonction du temps de mélange pour atteindre 28% au bout de 120 minutes de mélange.

Un troisième échantillon de poudre, référencé E3, dont la courbe est représentée en trait continu gris sur la Figure 1, correspondant à la poudre de l'échantillon E2 obtenu après traitement mécanique régulé thermiquement, a été mélangé dans le mélangeur rapide sans régulation thermique. Le gain en densité tassée est de 50% par rapport à la poudre initiale au bout de 30 minutes, et de 23% par rapport à la poudre du deuxième échantillon E2 mélangé avec régulation thermique.

Ces exemples démontrent que la densification est fortement influencée non seulement par la sollicitation mécanique de la poudre mais également par la température même si cette dernière reste modeste par rapport aux traitements thermiques réalisés jusqu'à présent sur les poudres.

## Revendications

1. Procédé de densification d'une poudre ou d'un mélange de poudres de polyarylène - éther-cétone (PAEK), **caractérisé en ce qu'**il consiste à mélanger la poudre ou le mélange de poudres, dans un mélangeur muni d'un agitateur rotatif comprenant au moins une pâle, pendant une durée comprise entre 30 minutes et 120 minutes, de préférence comprise entre 30 et 60 minutes, à une vitesse en bout de pâle comprise entre 30 m/s et 70 m/s, de préférence comprise entre 40 et 50 m/s ; et **en ce que** pendant le mélangeage, la température de la poudre augmente jusqu'à une température inférieure à la température de transition vitreuse la plus basse parmi les PAEK.

2. Procédé de densification selon la revendication 1, **caractérisé en ce que** le mélangeur est régulé thermiquement de sorte que la température soit inférieure à 40°C pendant tout ou partie du mélangeage.

3. Procédé de densification selon l'une des revendications précédentes, **caractérisé en ce que** la poudre utilisée est une poudre de polyéther-cétone-cétone (PEKK) présentant un pourcentage massique en motifs téréphtaliques par rapport à la somme des motifs téréphtaliques et isophtaliques compris entre 55 et 85%.

4. Procédé de densification selon la revendication 3, **caractérisé en ce que** la poudre utilisée comprend, en plus du PEKK, une poudre choisie parmi l'une au moins des poudres suivantes : PEK, PEEKEK, PEEK, PEKEKK ; la poudre de PEKK représentant plus de 50% massique, borne comprise.

5. Procédé de densification selon l'une des revendications précédentes, **caractérisé en ce que** la poudre de PAEK comprend en outre au moins une charge.

6. Procédé de densification selon l'une des revendications précédentes, **caractérisé en ce que** la poudre de PAEK comprend en outre au moins un additif.

7. Utilisation d'une poudre densifiée conformément au procédé selon l'une des revendications 1 à 6, pour la fabrication d'objet par une technologie choisie parmi l'une des technologies suivantes : le frittage laser, le revêtement de poudre, le moulage par compression, ou le moulage transfert.

8. Objet fabriqué par une technologie choisie parmi l'une des technologies suivantes : le frittage laser, le revêtement de poudre, le moulage par compression, ou le moulage transfert, à partir d'une poudre densifiée conformément au procédé selon l'une des revendications 1 à 6.

## Patentansprüche

1. Verfahren zum Verdichten eines Polyarylenetherketon- (PAEK-)Pulvers oder Pulvergemisches, **dadurch gekennzeichnet, dass** es in dem Mischen des Pulvers oder des Pulvergemisches in einem Mischer, der mit einem mindestens einen Flügel umfassenden rotierenden Rührwerk ausgestattet ist, für eine Dauer zwischen 30 Minuten und 120 Minuten, vorzugsweise zwischen 30 und 60 Minuten, bei einer Geschwindigkeit am Ende des Flügels zwischen 30 m/s und 70 m/s, vorzugsweise zwischen 40 und 50 m/s, besteht, und dass sich die Temperatur des Pulvers während des Mischens bis zu einer Temperatur unterhalb der niedrigsten Glasübergangstemperatur der PAEK erhöht.

2. Verdichtungsverfahren nach Anspruch 1, **dadurch gekennzeichnet, dass** der Mischer thermisch so geregelt ist, dass die Temperatur während des gesamten Mischens oder eines Teils davon weniger als 40 °C beträgt.

3. Verdichtungsverfahren nach einem der vorhergehenden Ansprüche, **dadurch gekennzeichnet, dass** es sich beim verwendeten Pulver um ein Polyetherketonketon- (PEKK-)Pulver handelt, das einen Gewichtsprozentanteil von Terephthaleinheiten, bezogen auf die Summe von Terephthal- und Isophthaleinheiten, zwischen 55 und 85 % aufweist.

4. Verdichtungsverfahren nach Anspruch 3, **dadurch gekennzeichnet, dass** das verwendete Pulver außer PEKK ein weiteres Pulver umfasst, das aus mindestens einem der folgenden Pulver ausgewählt wird: PEK, PEEKEK, PEEK, PEKEKK; wobei das PEKK-Pulver mehr als 50 Gew.-% darstellt, Grenzwert eingeschlossen.

5. Verdichtungsverfahren nach einem der vorhergehenden Ansprüche, **dadurch gekennzeichnet, dass** das PAEK-Pulver außerdem mindestens ein Füllmittel umfasst.

6. Verdichtungsverfahren nach einem der vorhergehenden Ansprüche, **dadurch gekennzeichnet, dass** das PAEK-Pulver außerdem mindestens ein Additiv umfasst.

7. Verwendung eines gemäß dem Verfahren nach einem der Ansprüche 1 bis 6 verdichteten Pulvers zur Herstellung eines Gegenstandes durch eine Technik, die aus einer der folgenden Techniken ausgewählt wird: Lasersintern, Pulverbeschichtung, Formpressen oder Spritzpressen.

8. Gegenstand, hergestellt durch eine Technik, die aus einer der folgenden Techniken ausgewählt wird: Lasersintern, Pulverbeschichtung, Formpressen oder Spritzpressen, aus einem Pulver, das gemäß dem Verfahren nach einem der Ansprüche 1 bis 6 verdichtet wird.

## Claims

1. A method of densifying a powder or a mixture of powders of polyarylene-ether-ketone (PAEK), **characterised in that** it consists in mixing the powder or mixture of powders in a mixer equipped with a rotary agitator comprising at least one blade, for a time of between 30 minutes and 120 minutes, preferably between 30 and 60 minutes, at a blade-end speed of between 30 m/s and 70 m/s, preferably between 40 and 50 m/s; and **in that** during the mixing, the temperature of the powder increases up to a temperature lower than the lowest glass transition temperature among the PAEK's.

2. The densifying method as claimed in claim 1, **characterised in that** the mixture is thermally regulated such that the temperature is lower than 40°C during all or part of the mixing.

3. The densifying method as claimed in one of the preceding claims, **characterised in that** the powder used is a polyether-ketone-ketone (PEKK) having a percentage by weight of terephthalic units relative to the sum of terephthalic and isophthalic units of between 55 and 85%.

4. The densifying method as claimed in claim 3, **characterised in that** the powder used comprises, in addition to the PEKK, a powder selected from at least one of the following powders: PEK, PEEKEK, PEEK, PEKEKK; the PEKK powder representing more than 50 wt.%, inclusive.

5. The densifying method as claimed in one of the preceding claims, **characterised in that** the PAEK powder further comprises at least one filler.

6. The densifying method as claimed in one of the preceding claims, **characterised in that** the PAEK powder further comprises at least one additive.

7. The use of a powder densified according to the method in accordance with any one of claims 1 to 6, for object manufacturing by a technology selected from among the following technologies: laser sintering, powder coating, compression moulding or transfer moulding.

8. An object manufactured by a technology selected from among one of the following technologies: laser sintering, powder coating, compression moulding or transfer moulding, from a powder densified in accordance with the method in accordance with one of claims 1 to 6.
